**Europäisches Patentamt**

**European Patent Office**

**Office européen des brevets**

(19)

(11) Veröffentlichungsnummer : **0 049 773**
**B1**

(12) **EUROPÄISCHE PATENTSCHRIFT**

(45) Veröffentlichungstag der Patentschrift :
**15.05.85**

(21) Anmeldenummer : **81107319.6**

(22) Anmeldetag : **16.09.81**

(51) Int. Cl.⁴ : **H 05 B   3/36,** H 05 B   3/12,
H 01 H 85/04

(54) Verfahren zur Herstellung eines elektrischen Heizelementes.

(30) Priorität : **10.10.80 NO 803026**

(43) Veröffentlichungstag der Anmeldung :
**21.04.82 Patentblatt 82/16**

(45) Bekanntmachung des Hinweises auf die Patenterteilung : **15.05.85 Patentblatt 85/20**

(84) Benannte Vertragsstaaten :
**AT BE CH DE FR GB IT LI NL SE**

(56) Entgegenhaltungen :
**DE-A- 2 808 319**
**FR-A- 2 266 119**
**US-A- 3 417 229**
**US-A- 3 547 725**

(73) Patentinhaber : **International Standard Electric Corporation**
**320 Park Avenue**
**New York New York 10022 (US)**

(72) Erfinder : **Bergersen, Hans Amund**
**Irisveien 2**
**Oslo 8 (NO)**
Erfinder : **Risberg, Ellif**
**Elksveien 74**
**N-1345 Osteräs (NO)**

(74) Vertreter : **Graf, Georg Hugo, Dipl.-Ing. et al**
**c/o Standard Elektrik Lorenz AG Patent- und Lizenzwesen Postfach 300 929 Kurze Strasse 8**
**D-7000 Stuttgart 30 (DE)**

EP 0 049 773 B1

## Beschreibung

Die Erfindung betrifft ein Verfahren zur Herstellung eines elektrischen Heizelementes nach dem Oberbegriff des Patentanspruches.

Solche Heizelemente sind aus den US-PS 3 263 307, 3 336 557, 4 025 893 und 4 092 626 bekannt, deren Vorteil ist, daß die Metallstreifen aus Widerstandsmaterial einen Schmelzpunkt aufweisen, der niedriger als 200 °C ist. Wenn solche Elemente als Heizelemente für Wohnungen bzw. Häuser verwendet werden, ist es oft notwendig bzw. unumgänglich solche Heizelemente in der Nähe von brennbarem Material, wie z. B. Holz oder Tapeten anzubringen, wobei zu beachten ist, daß die Temperatur in der Fläche der Heizelemente an keiner Stelle 150 °C überschreitet. Diese Forderung kann durch Verwendung von einer Metall-Legierung aus 61,5 % Zinn, 27,7 % Blei und 0,8 % Antimon für die Widerstandsstreifen, die einen Schmelzpunkt von 183 °C aufweist, erfüllt werden.

Ein Heizelement mit Widerstandsstreifen, die aus einem Material bestehen, das einen niedrigen Schmelzpunkt aufweist, und die zwischen zwei Schichten aus Isoliermaterial verschweißt sind, wirkt als eine große Wärmesicherung, wenn das Heizelement unter abnormalen Bedingungen betrieben wird, zum Beispiel, wenn es unnötig von wärmeisolierenden Materialien eingeschlossen ist. Wenn die Temperatur in solchen Fällen den Schmelzpunkt der Legierung von etwa 170 °C erreicht, verringern sich die mechanischen Eigenschaften der Streifen aus Isolierfolie, die in diesem Zustand sehr leicht brechen kann, bevor der Schmelzpunkt der Legierung erreicht ist. In diesem Augenblick, wenn die Isolierfolie zu brechen beginnt, wird der Querschnitt des Streifens verkleinert und die Legierung schmilzt sofort, was die Unterbrechung des Strompfades zur Folge hat. Das Heizelement muß danach durch ein neues ersetzt werden.

Weiterhin sind Heizelemente aus Widerstandsstreifen bekannt, die nur eine Sicherung aufweisen. Solche Elemente sind beispielsweise in der US-PS 3 417 229 beschrieben, in denen eine Wärmesicherung für jede einzelne Heizeinheit eingesetzt ist. Solche Heizeinheiten werden durch die Sicherung nur gegen Überhitzung geschützt, wenn die Sicherung selbst überhitzt ist. Eine solche Überhitzung passiert entweder, wenn die Sicherung selbst in hohem Maße wärmeisoliert ist, oder, wenn die Heizeinheit aus irgendeinem Grund strommäßig überlastet wird. Die Sicherung wird dann in einem solchen Fall bei einer bestimmten Temperatur schmelzen und damit den Strom durch das Heizelement unterbrechen, so daß die Heizeinheit selbst bei einer Reparatur möglicherweise nicht ausgetauscht werden muß, aber wenn die Fläche der Heizeinheit von der überhitzten Sicherung etwas entfernt ist, fängt die Tapete und andere Dinge, in deren Nähe die Heizeinheit angeordnet ist, Feuer, bevor die Sicherung den Strompfad unterbricht.

In dem US-Patent Nr. 3 423 574 ist ein Heizkissen dargestellt und beschrieben, in dem Wärmesicherungen und Thermostate angeordnet sind. Diese Elemente bestehen aus speziellen Bauteilen, die hinterher innerhalb des Heizkissens mit dem fertigen Widerstandsstreifenmuster verbunden sind. So eine Ausführung eines Gerätes, in der die Sicherungen und Thermostate eine Dicke und Breite aufweisen, die größer sind als die Widerstandsstreifen, sind für eine Decken- und Wandheizung ungeeignet. In der US-PS 3 108 175 ist eine Wärmedecke mit verteilt angeordneten Thermostatelementen beschrieben. Diese Thermostatelemente sind wesentlich größer in ihren Abmessungen als der Heizdraht und der Gesamtaufbau einer solchen Heizdecke kann ebenfalls nicht für eine Decken- oder Wandheizung verwendet werden.

Die bekannteste sicherste Art von Heizelementen aus Widerstandsstreifen ist deshalb die am Anfang der Abhandlung des Standes der Technik beschriebene Art eines Heizelementes. Durchgeführte Versuche haben jedoch gezeigt, daß es nicht notwendig ist, daß jeder und der ganze Querschnitt der als Streifen ausgebildeten Widerstandselemente für eine niedrige Temperatur abgesichert sein muß.

Ein an sich bekanntes Verfahren zur Herstellung von Heizelementen der beschriebenen Art ist folgendes : Ein Block einer gewünschten Legierung wird in eine Metallfolie von 5 bis 25 μ Dicke gewalzt. Die Folie wird danach in ein gewünschtes Widerstandsstreifenmuster, zum Beispiel in ein mäanderförmiges Muster, geschnitten, dann wird der Widerstandsstreifen auf einer oder auf beiden Seiten mit einem geeigneten Isolationsmaterial, zum Beispiel einem entsprechend wärmebelastbaren Kunststoff, beschichtet.

Es ist deshalb die Aufgabe der Erfindung, ein Verfahren zur Herstellung eines Heizelementes nach dem Oberbegriff des Patentanspruches anzugeben, bei dem mehrere Sicherungen über die Fläche des Heizelementes verteilt angeordnet sind, ohne daß die Sicherungen aus selbständigen Bauteilen oder Elementen bestehen, und bei dem die Sicherungen aus einem Material mit einem niedrigen Schmelzpunkt hergestellt sind.

Diese Aufgabe wird wie im Patentanspruch angegeben gelöst.

Bei Verwendung eines Heizelementes nach der vorliegenden Erfindung ergibt sich der große Vorteil, daß bei Eintreten einer Wärmeüberlastung des Heizelementes der Strom durch das Heizelement an definierten Stellen unterbrochen wird. Dadurch wird eine größere Sicherheit gewährleistet und das Risiko von Überhitzungen gesenkt.

Die Wärmesicherungen müssen in solch einer Weise über das Heizelement verteilt sein, daß, wenn das Heizelement zusätzlich zu der üblichen Installationsabdeckung noch teilweise mit verschiedenen Materialien, wie zum Beispiel Holzverschalungen, Möbelteile oder Teppiche usw., abgedeckt ist, die Oberflächentemperatur an der abgedeckten Fläche an keiner Stelle einen kritischen Wert annehmen darf.

Das Maß für eine unerlaubte Abdeckung kann mit der Art oder dem Abstand des Materials oder des Artikels variieren und der schlechteste Fall kann dann eintreten, wenn der Wärmeaustausch an einer bestimmten Stelle durch das Abdeckungsmaterial wirkungsvoll blockiert wird. Durch Versuche ist es möglich die größte Abmessung von einer willkürlichen Fläche des Heizelementes zu bestimmen, die eine wirkungsvolle thermische Isolation zulässt, ohne daß die Oberflächentemperatur an irgendeiner Stelle der abgedeckten Fläche auf einen kritischen Wert ansteigt. Diese Fläche oder Zone wird die kritische Zone genannt. Die Wärmesicherungen müssen deshalb auf dem Heizelement in solch einer Weise verteilt angeordnet sein, daß mindestens eine solche Sicherung anspricht, wenn der für die kritische Zone ermittelte Wert höher als zulässig ist, um die Wärmeentwicklung zu stoppen.

Es ist wahrscheinlich, daß die Sicherheitszone für das Heizelement, in der eine wirksame Wärmeisolation stattfindet, voraussichtlich als klein angesehen werden kann. Wir haben in durchgeführten Versuchen, um die kritische Zone zu definieren, ein 100 mm dickes Mineralwolle-Material als übertriebene Abdeckung an der Auß-enseite des regulären Oberflächenmaterials ver-wendet.

Um die Höchstgrenze für die Installation ausfindig machen zu können, wurde folgende Anordnung verwendet: Ein Heizelement in den Abmessungen 500 mal 1 200 mm, dessen Widerstandsstreifen aus einer Blei — Antimon — Legierung bestanden und zwischen Kunststoff- Folien geschichtet waren, in Mäanderform ausgeführt, wurde zwischen einem 200 mm Mineralwolle-Material, das sich horizontal erstreckte, und einer 12 mm dicken Spanplatte installiert, wobei die Verkleidungsplatte abwärts gerichtet war. Das Heizelement heizte, bei stabilisierten Bedingungen, mit 210 W/m², wobei sich eine Maxi-maltemperatur an der Spanplatte von 78 °C ergab.

Um eine etwa schädlichere Anordnung der Abdeckung bei der Installation zu untersuchen, haben wir Stücke von 100 mm Dicke aus Mineralwolle-Material gegen die untere Seite der Spanplatte eingefügt. Dadurch stieg die kritische Temperatur auf 175 °C an und die kritische Zone vergrößerte sich auf einen Wert von etwa 400 cm².

Die kritische Zone wird kleiner bei Verminderung der Dicke der Spanplatte, auch dann, wenn die Spanplatte gegen Material ausgetauscht wird, das an der unteren Seite Wärmeführungen aufweist.

Die kritischste Form der kritischen Zone gilt als ein Kreis, während ein Quadrat nur annähernd so kritische Werte in abgeschwächter Form ergibt.

Wenn ein geeignetes Heizelement nach der vorliegenden Erfindung hergestellt werden soll, ist es wesentlich, daß die Metallkomponente mit dem größten Anteil nicht so teuer ist, wobei Blei erfahrungsgemäß das geeignetste Material ist. Eine so dünne Folie aus Blei allein ist aber sehr spröde, deshalb sollte das Blei mit 1 % Antimon legiert werden.

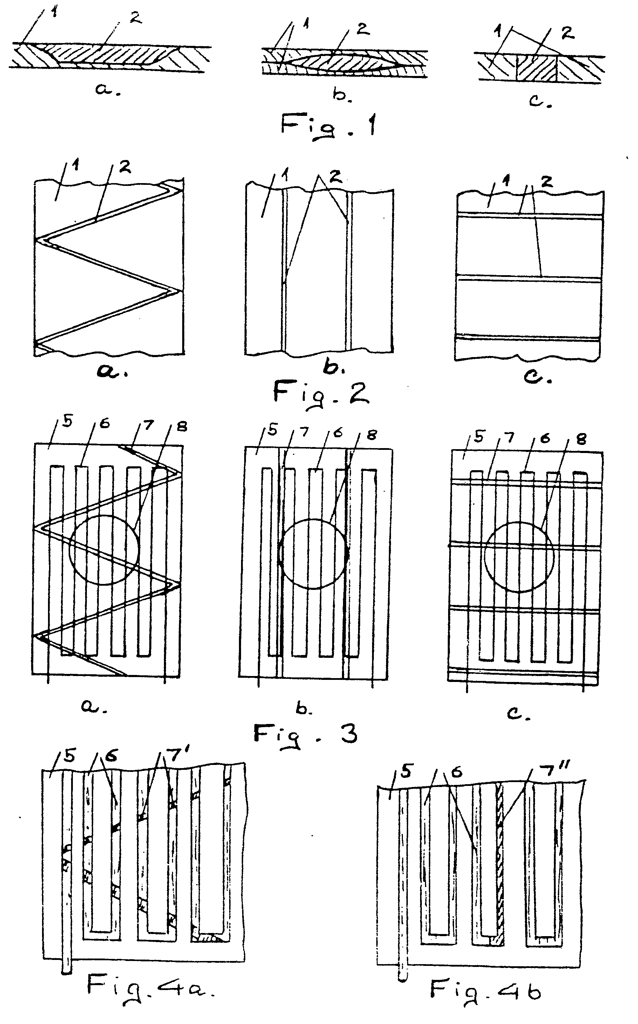

Die auf dem Heizelement verteilt angeordneten getrennten Wärmesicherungen werden durch eine örtliche Einfügung oder Aufbringung eines Metalls auf die Blei-Antimon-Folie erreicht, wobei das Metall der Sicherungen mit dem Grundmaterial der Folie eine Legierung eingeht. Dadurch ergibt sich eine Materialzusammensetzung an der Stelle an der das Metall der Sicherung eingesetzt worden ist, mit einem Schmelzpunkt, der niedriger als 200 °C ist. Das auf die Blei-Antimon-Folie aufgebrachte Wärmesicherungsmaterial ist in den Fig. 1 und 2 dargestellt und wird später beschrieben.

Ein geeignetes Material zur Erreichung eines niedrigen Schmelzpunktes ist Zinn oder eine Blei-Zinn-Antimon-Legierung, wie die eutektische Legierung von Blei und Zinn, die bei nahezu 183 °C schmilzt. Es besteht auch die Möglichkeit, eine Blei-Wismuth-Legierung zu verwenden, die etwa denselben Schmelzpunkt aufweist.

Die Erfindung wird anhand von in den Zeichnungen dargestellten Beispielen beschrieben. In den Zeichnungen zeigt:

Figuren 1a, 1b, 1c drei unterschiedliche Formen der Einbettung des Sicherungsmaterials in das Widerstandsmaterial, im Schnitt ausschnittsweise von der Seite gesehen, in einer ersten Zwischenstufe der Herstellung des Heizelementes,

Figuren 2a, 2b, 2c drei unterschiedliche Formen der Anordnung des Sicherungsmaterials auf der Oberfläche der Folie aus Widerstandsmaterial, ausschnittsweise von oben gesehen, ebenfalls in der ersten Stufe der Herstellung des Heizelementes (die Ausführungsformen 2a, 2b, 2c entsprechen nicht den mit den gleichen Buchstaben a, b, c bezeichneten Ausführungsformen in Fig. 1).

Figuren 3a, 3b, 3c drei unterschiedliche Formen der Anordnung des Sicherungsmaterials auf der Oberfläche der Folie aus Widerstandsmaterial, ausschnittsweise von oben gesehen, in einer zweiten Stufe der Herstellung eines Heizelementes, in der dargestellt ist, wie die in Fig. 2a, 2b, 2c auf der Folie aus Widerstandsmaterial angeordneten Formen des Sicherungsmaterials zu der noch zu schneidenden Mäanderform liegen,

Figuren 4a, 4b zwei Ausführungsformen des nach dem Verfahren hergestellten fertigen Heizelementes, im Ausschnitt und von oben gesehen, wobei die einzelnen Sicherungen in dem Widerstandsstreifenmuster in Fig. 4a entsprechend der in den Fig. 2a und 3a dargestellten Konfiguration auf einer Isolierfolie angeordnet und in Fig. 4b entsprechend der in den Fig. 2b und 3b dargestellten Konfiguration auf einer Isolierfolie angeordnet sind.

In Fig. 1 sind verschiedene Möglichkeiten zur Einbringung von Wärmesicherungen in Widerstandsmaterial dargestellt. Das Grundmaterial 1 in Fig. 1a ist mit einer Einfügung von Sicherungsmaterial 2 versehen, während in Fig. 1b das Sicherungsmaterial 2 zwischen zwei Schichten von Grundmaterial 1 eingebettet ist und in Fig. 1c die Folie aus Grundmaterial 1 im vollen Querschnitt der Grundmaterialfolie von Sicherungsmaterial unterbrochen wird. Während ein Querschnitt einer Grundmaterialfolie, wie dargestellt in Fig. 1a und Fig. 1b, durch einen Walz-Arbeitsgang hergestellt werden kann, schließt die Ausführungsform einer Grundmaterialfolie nach Fig. 1c auch einen Lötarbeitsgang vor dem Walz-Arbeitsgang mit ein.

Fig. 2 zeigt in schematischer Darstellung verschiedene Möglichkeiten a, b und c der Anordnung von Sicherungsmaterialstreifen in oder auf einer Folie aus Grundmaterial 1.

Wenn die Materialien 1 und 2, wie dargestellt in den Fig. 1 und 2, aus Blei und beziehungsweise aus Zinn bestehen (vorzugsweise sollte das Sicherungsmaterial 2 eine Legierung aus Blei und Zinn sein), muß angenommen werden, daß die resultierende Hitze bei normalem Betrieb des Heizelementes bewirken wird, daß die Materialien in der Kontaktzone legieren, so daß ein kleiner Teil des legierten Materials einen gewünschten Schmelzpunkt von ungefähr 180 °C haben wird. Es kann sehr wünschenswert sein während des Herstellungsprozesses und vor der Platzierung des Heizelementes in die gewünschte Position, die Kontaktzone zwischen dem Grundmaterial 1 und dem Sicherungsmaterial 2 einer Legierung zu unterziehen, um den gewünschten Schmelzpunkt zu erreichen.

Wenn ein Heizelement nach den oben beschriebenen oder nach anderen Methoden hergestellt wird, erhält man dadurch ein Element, das die Eigenschaften hat, daß irgendeine der verteilten getrennten Wärmesicherungen eine Legierung im Verhältnis von annäherd 60 % Zinn und 40 % Blei aufweist, die bei entsprechenden Bedingungen schmilzt und den Strompfad eines Heizelementes einschließlich dem der Wärmesicherung unterbricht, wenn die Wärmesicherung in einer Zone einer bestimmten Größe liegt, die die kritische Zone genannt wird.

In Fig. 3 sind drei alternative Möglichkeiten a, b und c dargestellt, um Sicherungsmaterialstreifen 7 auf einem Heizelement 5 anzuordnen. Der elektrische Widerstandsstreifen 6, der in dieser Darstellung noch nicht in die dargestellte Mäanderform geschnitten ist, kann auch in einer möglichen anderen Ausführung angeordnet sein und später geschnitten werden. Diese ungeschnittene Darstellung ist natürlich so zu verstehen, daß die in voll ausgezogenen Linien dargestellten Sicherungsstreifen entlang dieser Linien keinen Strompfad bilden, da die Widerstandsstreifen erst noch in die gewünschte Form geschnitten werden müssen. Diese Feststellung trifft für die Ausführungsbeispiele nach den Fig. 3a und 3c zu, für die das fertige Produkt (das Heizelement) eine ähnliche Ausführung zeigt, nämlich die teilweise Ansicht eines Heizelementes, dargestellt in Fig. 4a. In Fig. 3b, in der die Sicherungsstreifen parallel mit den sich längs erstreckenden Teilen des mäanderförmigen Widerstandsstreifens liegen, führt der Sicherungsstreifen (nach dem Schneiden der Widerstandsstreifen) im fertigen Heizelement über einen wesentlichen Teil seiner Länge Strom.

Gültig für alle dargestellten Ausführungsbeispiele a, b und c in Fig. 3 ist, daß eine getrennte Wärmesicherung an allen sich kreuzenden oder sich überlappenden Stellen zwischen einem Sicherungsstreifen 7 und einem Widerstandsstreifen 6 erhalten wird. In Übereinstimmung mit der vorliegenden Erfindung sind die getrennten Wärmesicherungen verteilt, so daß mindestens eine Sicherung ganz oder teilweise in einer kritischen Zone 8 zu liegen kommt, die sich zwangsläufig auf dem fertigen Heizelement 5 im Betrieb ergibt. Wie beschrieben spricht die Sicherung an (schmilzt), wenn sie in der kritischen Zone liegt und die Temperatur einen Grenzwert erreicht, bei dem sie den Strompfad unterbricht.

In Fig. 4a und Fig. 4b ist jeweils ein Teil eines fertigen Heizelementes 5, mit Anordnung der Widerstandsstreifen mit in diese einbezogenen Sicherungen in der in Fig. 3a und Fig. 3b dargestellten Form, schematisch und vergrößert dargestellt. Die dort dargestellten Heizelemente 5 enthalten Widerstandsstreifen 6, die mit einer Anzahl getrennter Wärmesicherungen 7' beziehungsweise 7'' versehen sind.

Die Sicherungsmaterialstreifen sollten auf der Folie aus Grundmaterial 1 des Widerstandsmaterials in dem Stadium angeordnet sein, bevor die Folie aus Grundmaterial 1 in die gewünschte Form bzw. Abmessung für die Widerstandsstreifen 6 geschnitten werden (Fig. 2). Auf diese Weise wird sichergestellt, daß die Sicherungsmaterialstreifen beim Schneiden der Widerstandsstreifen in die gewünschte Form auch geschnitten werden, um die gewünschte Anzahl von Wärmesicherungen in oder auf den Widerstandsstreifen zu erhalten.

In allen Ausführungsformen der vorliegenden Erfindung wird ein fester bzw. guter Kontakt oder eine durch Legierung entstandene Verbindung zwischen den beiden Materialien erleichtert, wenn die Materialoberflächen sauber und frei von Korrosion bzw. Oxydfilmbildung sind, bevor die Kontaktierung beginnt.

## Patentanspruch

Verfahren zur Herstellung eines flachen Heizelementes (5) mit einer Sicherung (7' ; 7'') gegen Überhitzung, bei dem aus elektrischem Widerstandsmaterial eine Folie (1) gewalzt wird, die in ein beispielsweise mäanderförmiges Muster von zusammenhängenden Widerstandsstreifen geschnitten wird, das eingebettet wird in oder aufgebracht wird auf einen Isolierkörper, dadurch gekennzeichnet, daß Pfade, Drähte oder ähnliche Ausbildungen von Sicherungsmaterial (2) aus Zinn oder einer Blei-Zinn- oder einer Blei-Zinn-Antimon- oder einer Blei-Wismuth-Legierung in einem vorgesehenen Muster auf oder in die Folie von aus einer Blei-Antimon-Legierung bestehendem Widerstandsmaterial (1) auf- oder eingebracht werden, daß die Folie in einem weiteren Arbeitsgang in einer einheitlichen Dicke ausgewalzt wird, daß die aus Widerstandsmaterial (1) und eingewalztem Sicherungsmaterial (2) zusammengesetzte Folie geschnitten wird, so daß sich ein vorbestimmtes Muster von zusammenhängenden Widerstandsstreifen ergibt, die jeweils an vorbestimmten Stellen mindestens eine Wärmesicherung (7'; 7") aus Sicherungsmaterial (2) einschließen.

## Claim

Method of manufacturing a flat heating element (5) with a fuse (7'; 7") against over-heating, whereby a foil (1) is rolled from electrical resistance material, the said foil being cut into a — for instance — serpentine pattern of interconnected resistance strips which is embedded in or applied on an insulating body, characterised in this, that paths, wires or similar formations of fuse material (2) of tin or a lead-tin or lead-tin-antimony or lead-bismuth alloy are, in a prescribed pattern, applied on or inserted in the foil of resistance material (1) made of a lead-antimony alloy, that the foil is rolled out in a uniform thickness in a further operation, that the foil composed of resistance material (1) and rolled-in fuse material (2) is cut so as to produce a predetermined pattern of interconnected resistance strips each of which incorporates at least one thermal fuse (7'; 7") of fuse material (2) at predetermined places.

## Revendication

Procédé de réalisation d'un élément chauffant plat (5) avec un fusible (7'; 7") contre la surchauffe, dans lequel on lamine une feuille (1) en matière de résistance électrique, on la découpe en bandes de résistance contiguës, par exemple selon un motif en méandres et on la loge dans, ou on l'applique sur, un corps isolant, caractérisé en ce que des trajets, fils ou configurations analogues, en matière fusible (2) en étain ou en alliage plomb-étain ou alliage plomb-étain-antimoine ou alliage plomb-antimoine, sont disposés sur ou dans la feuille de matière de résistance (1) constituée d'un alliage plomb-antimoine, en ce qu'au cours d'une autre opération, la feuille est laminée à une épaisseur uniforme et en ce que la feuille composée de matière de résistance (1) et de matière fusible laminée (2) est découpée de façon qu'il en résulte un motif prédéterminé de bandes de résistance contiguës qui englobent chacune, en des endroits prédéterminés, au moins un fusible thermique (7', 7") faite de matière fusible (2).

Fig. 1

Fig. 2

Fig. 3

Fig. 4a.

Fig. 4b